# NEW EUROPEAN PATENT SPECIFICATION

(11) **EP 0 566 367 B2**
(45) Date of publication and mention of the opposition decision: **27.01.1999**
(45) Mention of the grant of the patent: 14.08.1996
(21) Application number: 93302868.0
(22) Date of filing: 14.04.1993
(51) Int. Cl.: B01J 13/14

(54) **Thermoexpandable microcapsules, process for production thereof, and microballoons made therefrom**
Thermisch expandierbare Mikrokapseln, Verfahren zu ihrer Herstellung und Mikroballonen daraus hergestellt
Microcapsules thermo-expansibles, procédé pour leur fabrications et microballons préparés à partir de ceux-ci

(30) Priority: 15.04.1992 JP 95174/92
(43) Date of publication of application: 20.10.1993
(73) Proprietor: MATSUMOTO YUSHI-SEIYAKU CO., LTD., Yao-City, Osaka (JP)
(72) Inventor: Kida, Sueo, Kashihara-shi, Nara-ken (JP); Kitano, Kenichi, Osaka-shi, Osaka-fu (JP); Kyuno, Seiji, Itami-shi, Hyogo-ken (JP)
(74) Representative: Baverstock, Michael George Douglas

(56) References cited:
- JP-A-62 130 602
- US-A- 3 386 926
- PATENT ABSTRACTS OF JAPAN vol. 012, no. 181 (C-499)27 May 1988
- DATABASE WPI Week 8128, 26 May 1981 Derwent Publications Ltd., London, GB; AN 81-50838

## Description

The present invention relates to thermoexpandable microcapsules excellent in heat resistance, and to a process for production thereof.

A method of production of thermoexpandable microcapsules has been described in, for instance, Japanese Patent Publication No. 62-286534, in which an expanding agent which is vaporizable at a temperature lower than the softening temperature of a thermoplastic polymer is microencapsulated with the thermoplastic polymer in accord with Comparative Examples 2 and 3 described hereafter.

A thermoexpandable microcapsule has been proposed which is excellent in heat resistance and solvent resistance. in which nitrile monomers are used in an amount of 80% by weight or more as a monomer having a polymerizable double bond for the shell of the microcapsule.

The present invention provides a microcapsule which is easily thermoexpanded, but the thermoexpanded microcapsule obtained, that is, a microballoon, has a high heat resistance. Such a thermoexpandable microcapsule comprises a shell and an expanding agent therein, in which said shell is made from a copolymer consisting essentially of a polymerizable monomer having two or more polymerizable double bonds and a monomer which can produce a homopolymer having a high glass transition temperature, and said expanding agent is vaporizable at a temperature lower than the softening temperature of the copolymer.

The present invention relates to a thermoexpandable microcapsule, the production thereof, and a microballoon obtained from the microcapsule.

The shell of a thermoexpandable microcapsule must be softened by heat at expansion. This means that the expanded microcapsule obtained (the expanded microcapsule is referred to as "microballoon" hereinafter) is also softened by heat, that is, the microballoon obtained is liable to shrink or deform by heat.

An object of the present invention is to provide a thermoplastic microcapsule which is softened by heat, and not only has high expandability but also gives a microballoon having a high heat resistance after expansion, and the production of the microcapsule.

The present invention provides a thermoexpandable microcapsule which comprises a shell and an expanding agent therein, in which said shell is made from a copolymer consisting essentially of a polymerizable monomer (A) having two or more polymerizable double bonds and a monomer (B) which can produce a homopolymer having a high glass transition temperature, and said expaning agent is vaporizable at a temperature lower than the softening temperature of the copolymer, and to the production thereof.

As the polymerizable monomer (A) having two or more polymerizable double bonds is used a polyfunctional vinyl monomer and an inner olefin-containing monomer. Examples of the polyfunctional vinyl monomer are divinylbenzene, ethylene glycol di(meth)acrylate (the term "(meth)acryl" means both of "methacryl" and "acryl" in the present specification), trimethylolpropane tri(meth)acrylate, glycerol di(meth)acrylate, pentaerythritol tri(meth)acrylate and tri(meth)acrylformal. The most preferred polyfunctional vinyl monomers are ethylene glycol di(meth)acrylate, trimethylolpropane tri(meth)acrylate and triacrylformal.

The inner olefin-containing monomer is defined as vinyl cinnamate, vinyl crotonate, vinyl maleate, vinyl fumarate or dicyclopentenyl acrylate. The most preferred monomers are vinyl crotonate, vinyl maleate and dicyclopentenyl acrylate.

The polymerizable monomer (A) having two or more polymerizable double bonds according to the present invention may be used, preferably, in the amount of 0.01 - 3% by weight, more preferably 0.05 - 2% by weight. If the amount of the polymerizable monomer (A) is less than 0.01% by weight, a copolymer with less crosslinking is obtained, which has reduced heat resistance. However, when the amount of monomer (A) is more than 3% by weight, a polymer having such a high degree of crosslinking is obtained that the expandability decreases. Both are not preferable.

A preferred monomer (B) which can produce a homopolymer having a high glass transition temperature is one giving a homopolymer having a glass transition temperature of 80°C or higher, and more preferably 100°C to 200°C. Preferred examples of such a monomer (B) include methacrylonitrile, acrylamide. methacrylic acid or salts thereof, isobornyl methacrylate and dicyclopentenyl acrylate. Especially preferred monomers (B) are methacrylonitrile, acrylamide, methacrylic acid or salts thereof, isobornyl methacrylate and dicyclopentenyl acrylate.

The monomer (B) which can produce a homopolymer having a high glass transition temperature may be used in an amount of 10 to 80% by weight, more preferably 20 to 50% by weight to prepare the microcapsule. If the monomer (B) exceeds 80% by weight, shell formation, especially evenness of the shell, deteriorates with less expandability. If the amount is less than 10% by weight heat resistance of the balloon obtained cannot be improved.

According to the present invention other monomers such as vinyl chloride, vinylidene chloride, acrylonitrile, vinyl acetate, styrene and methylacrylate may be used in amounts of 90% by weight or less, preferably 50% by weight or less.

The expanding agent vaporizable at a temperature lower than the softening temperature of the copolymer of the shell is an expanding agent encapsulated into the microcapsule of the present invention. As the softening temperature of the copolymer is usually about 100 to 150°C, the expanding agent of the present invention is one vaporizable at a lower temperature than the above. Examples of the expanding agent include propane, propylene, butene, n-butane, isobutane, isopentane, neopentane, n-pentane, hexane, heptane, petroleum ether, halogenized methanes (e.g. methyl chloride, methylene chloride, CCl₃F and CCl₂F₂), and tetraalkylsilanes (e.g. tetramethylsilane and trimethylsilane).

A copolymer forming the shell of the present invention may be prepared preferably using a radical initiator having a long half-life. As the radical initiator having a long half-life is preferred one having a half-life of about 10 hours or longer (at 50°C), for example, azobisisobutyronitrile, dicumyl peroxide, lauroyl peroxide, benzoyl peroxide, methyl ethyl ketone peroxide, azobis-2-methylbutyronitrile and dimethyl azobisisobutylate.

The crosslinking reaction is progressed by a radical initiator having a long half-life when the microcapsule is heated to expand it, and the heat resistance of the microballoon is much improved. The amount of the initiator to be used is preferably about 0.1 to 5% by weight, more preferably about 0.2 to 3% by weight. When the amount of the initiator exceeds 5% by weight, extreme polymerization will occur, which is very dangerous. When the amount of the initiator is less than 0.1% by weight, only a low rate of polymerization is achieved, so that sufficient expandability and heat resistance cannot be obtained.

The method of production of a microcapsule using the above ingredients is not limited, and may be performed in a conventional manner, a preferred example being as described in Japanese Patent Publication No. 42-26524 wherein a polymerizable monomer is mixed with a vaporizable expanding agent and an initiator, and the mixture obtained is suspension-polymerized in an aqueous medium which may contain for example an emulsifier and a dispersing agent if desired.

The formulation of the aqueous medium for the suspension polymerization is not limited, but in general it may contain inorganic additives such as silica, calcium phosphate, calcium carbonate, sodium chloride and sodium sulfate; organic additives such as diethanolamine-adipic acid condensation products, gelatin, methyl cellulose, polyvinyl alcohol, polyethylene oxide, dioctyl sulfosuccinate and sorbitan esters. These additives may be dissolved in deionized water and the pH value may be preferably adjusted to about 3 - 4 using an acid.

The particle size of the thermoexpandable microcapsule is preferably 10 to 30 µm, more preferably about 15 to 25 µm, which can produce microballoons having a particle size of about 50 to 150 µm when expanded at about 130 to 200°C. The microballoons obtained are resistant to a temperature of 150 to 200°C.

The present invention is explained by the following examples.

### COMPARATIVE EXAMPLE 1

An oily mixture and an aqueous medium are prepared according to the following formulations:

### Oily Mixture

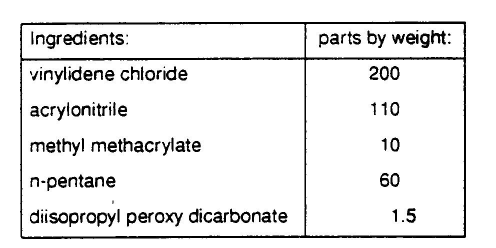

### Aqueous Medium

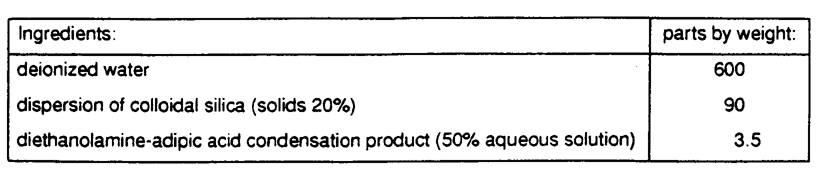

The above oily mixture and aqueous medium were charged into a 1.5 liter autoclave, dispersed by means of a homomixer (M-Type available from Tokushu Kakoki K.K.) at 6000 rpm for 120 seconds, and polymerized under a nitrogen atmosphere, at 3 - 4 kg/cm², and 60°C for 20 hours to give microcapsules of an average diameter of 17.8 µm. The microcapsules obtained were heated at 140°C for 2 minutes under heated air to give microballoons having a true specific gravity of 0.03 and an average diameter of 70-80 µm. The microballoons obtained were heated at 150°C for 20 minutes under atmospheric pressure to determine the change in the true gravity, by which the heat resistance was evaluated. The results are shown in Table 1.

### COMPARATIVE EXAMPLE 2

According to following formulation an oily mixture was prepared.

### Formulation

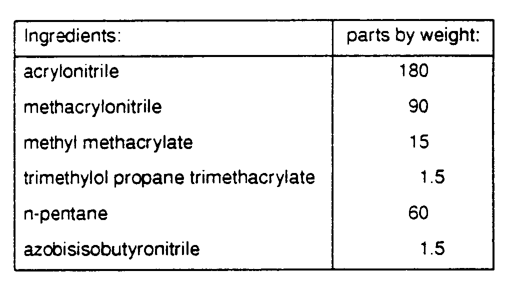

This oily mixture and the aqueous medium used in Comparative Example 1 were mixed and microencapsulated according to the procedure of Comparative Example 1 to give microcapsules of average diameter 16.9 µm. The microcapsules obtained were heated in heated air of 160°C for 2 minutes to give microballoons having a true gravity of 0.026 and an average diameter of 80 to 90 µm. The change of the true gravity of these microballoons observed by heating under atmospheric pressure, at 150°C and at 180°C for 20 minutes to learn the heat resistance of the microballoons. The results are shown in Table 1.

### COMPARATIVE EXAMPLE 3

An oily mixture was prepared according to the following formulation:

### Formulation

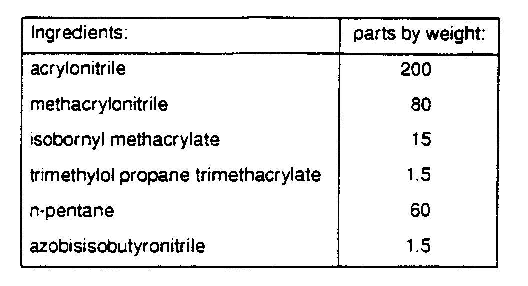

This oily mixture and aqueous medium of Comparative Example 1 were mixed, and microencapsulated according to the procedure of Comparative Example 1 to give microcapsules of average diameter 18.5 µm. These microcapsules were heated in heated air of 160°C for 2 minutes to give microballoons having a true gravity 0.035 and an average diameter of 90 to 100 µm. In order to learn the heat resistance of the microballoons obtained the change of true gravity was observed by heating under atmospheric pressure at 160°C and 180°C for 20 minutes, and the results are shown in Table 1.

### EXAMPLE 1

An oily mixture was prepared according to the following formulation.

### Formulation:

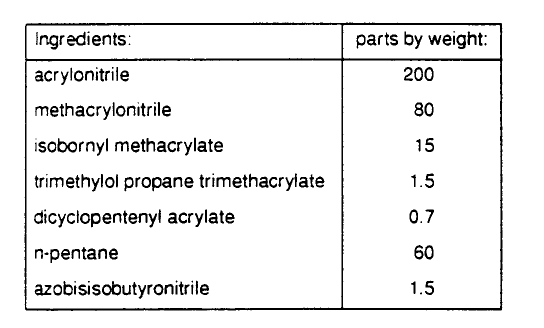

This oily mixture and the aqueous medium of Comparative Example 1 were mixed, and microencapsulated according to the procedure of Comparative Example 1 to give microcapsules of average diameter 17.2 µm. These microcapsules were heated in heated air of 150°C for 2 minutes to give microballoons having a true gravity of 0.022 and an average diameter of 90 to 100 µm. In order to determine the heat resistance of the microballoons obtained the change of true gravity was determined by heating under atmospheric pressure at 160°C and 180°C for 20 minutes, and the results are shown in Table 1.

### EXAMPLE 2

An oily mixture was prepared according to the following formulation:

### Formulation

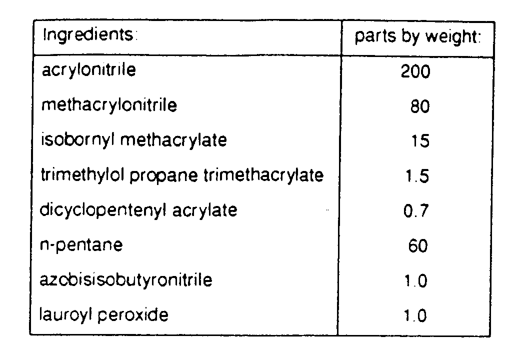

This oily mixture and the aqueous medium of Comparative Example 1 were mixed, and microencapsulated according to the procedure of Comparative Example 1 to give microcapsules of average diameter 17.8 µm. These microcapsules were heated in heated air at 160°C for 2 minutes to give microballoons having a true gravity of 0.026 and an average diameter of 80 to 90 µm. In order to determine the heat resistance of the microballoons obtained the change of true gravity was determined by heating under atmospheric pressure at 160°C and 180°C for 20 minutes, and the results are shown in Table 1.

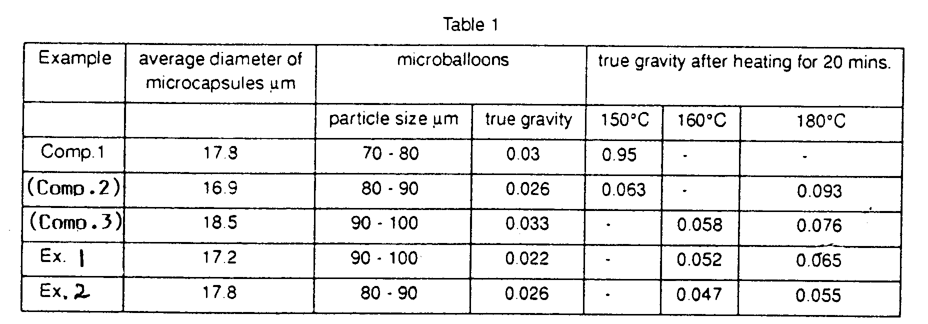

## Claims

1. A thermoexpandable microcapsule which comprises a shell and an expanding agent therein, in which said shell is made from a copolymer consisting essentially of a polymerizable monomer having two or more polymerizable double bonds which is a polyfunctional vinyl monomer and an inner olefin-containing monomer, and a monomer which can produce a homopolymer having a high glass transition temperature, and said expanding agent is vaporizable at a temperature lower than the softening temperature of the copolymer.

2. A thermoexpandable microcapsule as claimed in claim 1 or claim 2, in which the monomer which can produce a homopolymer having a high glass transition temperature is selected from methacrylonitrile, acrylamide, methacrylic acid or salts thereof, isobornyl methacrylate, and dicyclopentenyl acrylate.

3. A process for production of thermoexpandable microcapsules which comprises dispersion-polymerizing a mixture of a polymerizable monomer having two or more polymerizable double bonds which is a polyfunctional vinyl monomer and an inner olefin-containing monomer, and a monomer which can produce a homopolymer having a high glass transition temperature in the presence of an expanding agent vaporizable at a temperature lower than the softening temperature of a copolymer derivable from the above monomers.

4. A microballoon when prepared by thermal expansion of a thermoexpandable microcapsule as claimed claim 1 or 2 or when made by a process as claimed in claim 3.

## Patentansprüche

1. Thermoexpandierbare Mikrokapsel, die eine Umhüllung und ein Expandiermittel darin umfaßt, wobei die Umhüllung aus einem Copolymeren hergestellt worden ist, welches im wesentlichen aus einem polymerisierbaren Monomeren mit zwei oder mehreren polymerisierbaren Doppelbindungen, nämlich einem polyfunktionellen Vinylmonomeren und einem Monomeren, welches ein inneres Olefin enthält, und einem Monomeren, welches ein Homopolymeres mit hoher Glasübergangstemperatur ergibt, besteht, und wobei das Expandiermittel bei einer Temperatur verdampfbar ist, die niedriger ist als die Erweichungstemperatur des Copolymeren.

2. Thermoexpandierbare Mikrokapsel nach Anspruch 1, wobei das Monomere, welches ein Homopolymeres mit hoher Glasübergangstemperatur ergibt, ausgewählt wird aus Methacrylnitril, Acrylamid, Methacrylsäure oder deren Salzen, Isobornylmethacrylat und Dicyclopentylacrylat.

3. Verfahren zur Herstellung thermoexpandierbarer Mikrokapseln durch Dispersionspolymerisation eines Gemisches aus einem polymerisierbaren Monomeren mit zwei oder mehreren polymerisierbaren Doppelbindungen, nämlich einem polyfunktionellen Vinylmonomeren und einem Monomeren, welches ein inneres Olefin enthält, und einem Monomeren, welches ein Homopolymeres mit hoher Glasübergangstemperatur ergibt, in Anwesenheit eines Expandiermittels, das bei einer Temperatur verdampfbar ist, die niedriger ist als die Erweichungstemperatur des Copolymeren, welches sich von den obigen Monomeren ableitet.

4. Mikrohohlperlen, hergestellt durch thermische Expansion einer thermoexpandierbaren Mikrokapsel nach einem der Ansprüche 1 oder 2, oder hergestellt gemäß dem Verfahren nach Anspruch 3.

## Revendications

1. Microcapsule thermoexpansible, qui comprend une enveloppe et un agent d'expansion contenu dans celle-ci, dans laquelle ladite enveloppe est faite d'un copolymère consistant essentiellement en un monomère polymérisable ayant au moins deux doubles liaisons polymérisables, qui est un monomère vinylique polyfonctionnel et un monomère contenant une oléfine interne, et en un monomère qui peut produire un homopolymère ayant une température de transition vitreuse élevée, et ledit agent d'expansion est vaporisable à une température inférieure à la température de ramollissement du copolymère.

2. Microcapsule thermoexpansible selon la revendication 1 ou la revendication 2, dans laquelle le monomère qui peut produire un homopolymère ayant une température de transition vitreuse élevée est choisi parmi le méthacrylonitrile, l'acrylamide, l'acide méthacrylique ou ses sels, le méthacrylate d'isobornyle et l'acrylate de dicyclopentényle.

3. Procédé de fabrication de microcapsules thermoexpansibles, qui comprend la polymérisation en dispersion d'un mélange d'un monomère polymérisable ayant au moins deux doubles liaisons polymérisables, qui est un monomère vinylique polyfonctionnel et un monomère contenant une oléfine interne, et d'un monomère qui peut produire un homopolymère ayant une température de transition vitreuse élevée, en présence d'un agent d'expansion vaporisable à une température inférieure à la température de ramollissement d'un copolymère pouvant être obtenu à partir des monomères ci-dessus.

4. Microballon en tant qu'il est préparé par expansion thermique d'une microcapsule thermoexpansible telle que définie dans la revendication 1 ou 2 ou bien en tant qu'il est fabriqué par un procédé tel que défini à la revendication 3.
